# FASCICULE DE BREVET EUROPEEN

(11) **EP 3 123 012 B1**
(45) Date de publication et mention de la délivrance du brevet: **04.03.2020**
(21) Numéro de dépôt: 15717546.4
(22) Date de dépôt: 20.03.2015
(51) Int. Cl.: F02C 6/02, F02C 6/08, F02C 7/277

(54) **PROCÉDÉ D'ASSISTANCE D'UN TURBOMOTEUR EN VEILLE D'UN HÉLICOPTÈRE MULTI-MOTEUR ET ARCHITECTURE D'UN SYSTÈME PROPULSIF D'UN HÉLICOPTÈRE COMPRENANT AU MOINS UN TURBOMOTEUR POUVANT ÊTRE EN VEILLE**
VERFAHREN ZUR UNTERSTÜTZUNG EINES TURBOMOTORS IM BEREITSCHAFTSMODUS EINES MEHRMOTORIGEN HUBSCHRAUBERS UND ARCHITEKTUR EINES ANTRIEBSAGGREGATS EINES HUBSCHRAUBERS MIT MINDESTENS EINEM TURBOMOTOR, DER SICH IM BEREITSCHAFTSMODUS BEFINDEN KANN
METHOD FOR ASSISTING A TURBOSHAFT ENGINE IN STANDBY OF A MULTI-ENGINE HELICOPTER AND ARCHITECTURE OF A PROPULSION SYSTEM OF A HELICOPTER COMPRISING AT LEAST ONE TURBOSHAFT ENGINE THAT CAN BE IN STANDBY

(30) Priorité: 27.03.2014 FR 1452646
(43) Date de publication de la demande: 01.02.2017
(73) Titulaire: Safran Helicopter Engines, 64510 Bordes (FR)
(72) Inventeur: BEDRINE, Olivier, F-64290 Bosdarros (FR); DESCUBES, Olivier Pierre, F-64800 Nay (FR)
(74) Mandataire: Gevers & Orès
(86) Numéro de dépôt international: PCT/FR2015/050690
(87) Numéro de publication internationale: WO 2015/145034

(56) Documents cités:
- EP-A2- 2 267 288
- EP-A2- 2 602 458
- FR-A1- 2 992 024

## Description

### 1. Domaine technique de l'invention

L'invention concerne un procédé d'assistance d'un turbomoteur en veille d'un hélicoptère multi-moteur, en particulier bimoteur. L'invention concerne également une architecture d'un système propulsif d'un hélicoptère multi-moteur comprenant au moins un turbomoteur pouvant être placé dans un régime de veille spécifique.

### 2. Arrière-plan technologique

Un hélicoptère est en général équipé d'au moins deux turbomoteurs qui fonctionnent à des régimes similaires qui dépendent des conditions de vol de l'hélicoptère. Dans tout le texte qui suit, un hélicoptère est dit en situation de vol de croisière lorsqu'il évolue dans des conditions normales au cours de toutes les phases du vol, hors phases transitoires de décollage, de montée, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI (*One Engine Inoperative*)*.*

Il est connu que lorsque l'hélicoptère est en situation de vol de croisière, les turbomoteurs fonctionnent à des niveaux de puissance faibles, inférieurs à leur puissance maximale continue. Ces faibles niveaux de puissance entraînent une consommation spécifique (ci-après, *Cs*) définie comme le rapport entre la consommation horaire de carburant par la chambre de combustion du turbomoteur et la puissance mécanique fournie par ce turbomoteur, supérieure de l'ordre de 30% à la Cs de la puissance maximale de décollage, et donc une surconsommation en carburant en vol de croisière.

En outre, les turbomoteurs d'un hélicoptère sont conçus de manière surdimensionnée pour pouvoir maintenir l'hélicoptère en vol en cas de panne de l'un des moteurs. Cette situation de vol correspond au régime OEI décrit ci-dessus. Cette situation de vol survient suite à la perte d'un moteur et se traduit par le fait que chaque moteur en fonctionnement fournit une puissance bien au-delà de sa puissance nominale pour permettre à l'hélicoptère de faire face à une situation périlleuse, puis de pouvoir poursuivre son vol.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation.

Ces turbomoteurs surdimensionnés sont pénalisants en termes de masse et de consommation de carburant. Afin de réduire cette consommation en vol de croisière, il est envisagé d'arrêter en vol l'un des turbomoteurs et de le placer en régime, dit de veille. Le ou les moteurs actifs fonctionnent alors à des niveaux de puissance plus élevés pour fournir toute la puissance nécessaire et donc à des niveaux de Cs plus favorables.

Une architecture connue est décrite dans le document FR 2992024 A1. Par ailleurs, les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de puissance stabilisée, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

Les demandeurs ont notamment proposé les deux régimes de veille suivants :
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale. Un tel régime permet d'avoir le générateur de gaz à un régime de rotation le plus bas possible afin de minimiser la consommation de carburant. Pour améliorer la performance du générateur de gaz dans ce régime bas, il est prévu d'injecter de l'énergie mécanique sur le générateur de gaz par une source extérieure.
- un régime de veille, dit vireur, dans lequel la chambre de combustion est éteinte et l'arbre du générateur de gaz tourne, assisté mécaniquement, à une vitesse comprise entre 5 et 20% de la vitesse nominale. Un tel régime permet de maintenir une rotation du générateur de gaz dans une plage de vitesse qui permet un allumage plus rapide de la chambre de combustion en cas de besoin.

Ces deux régimes de veille nécessitent donc une assistance continue du générateur de gaz. La durée d'assistance peut être de plusieurs heures sur la mission de l'hélicoptère. Il se pose donc le problème technique de fournir un procédé d'assistance mécanique d'un turbomoteur en veille. Il se pose aussi le problème technique de fournir une architecture d'un système propulsif qui permet d'assurer l'assistance mécanique du générateur de gaz d'un turbomoteur en veille au cours de la mission.

### 3. Objectifs de l'invention

L'invention vise à fournir un procédé d'assistance mécanique du générateur de gaz d'un turbomoteur en veille.

L'invention vise aussi à fournir une architecture d'un système propulsif qui permet d'assurer l'assistance mécanique du générateur de gaz d'un turbomoteur en veille au cours de la mission.

L'invention vise aussi à fournir, dans au moins un mode de réalisation, une telle architecture qui ne fait pas appel à une machine électrique spécifique.

### 4. Exposé de l'invention

Pour ce faire, l'invention concerne une architecture d'un système propulsif d'un hélicoptère multi-moteur comprenant des turbomoteurs, chaque turbomoteur comprenant un générateur de gaz et une turbine libre entraînée en rotation par les gaz dudit générateur de gaz.

Une architecture selon l'invention est caractérisée en ce qu'elle comprend:
- au moins un turbomoteur parmi lesdits turbomoteurs, dit turbomoteur hybride, apte à fonctionner dans au moins un régime de veille au cours d'un vol stabilisé de l'hélicoptère, les autres turbomoteurs, dits turbomoteurs en marche, fonctionnant seuls au cours de ce vol stabilisé,
- une turbine à air reliée mécaniquement audit générateur de gaz,
- des moyens de prélèvement d'air sous pression sur le générateur de gaz d'un turbomoteur en marche,
- une conduite de cheminement de cet air prélevé vers ladite turbine à air de sorte que la turbine à air puisse transformer l'énergie de cet air sous pression en une énergie mécanique entraînant ledit générateur de gaz dudit turbomoteur hybride.

Une architecture selon l'invention permet donc de fournir de la puissance mécanique au générateur de gaz du turbomoteur hybride par le bais d'une turbine à air. Cette turbine à air est alimentée par de l'air sous pression prélevé sur un turbomoteur en marche. L'architecture selon l'invention permet donc d'assister mécaniquement le générateur de gaz du turbomoteur hybride, lorsqu'il est placé dans un régime de veille « super-ralenti assisté » ou un régime de veille « vireur ».

Cette assistance mécanique est possible sans néanmoins nécessiter le recours à une machine électrique extérieure. L'invention permet donc un gain de masse, de coût et de durée de vie par rapport à une assistance électrique. En outre, l'invention ne nécessite pas de prélever de l'énergie électrique sur le réseau de bord de l'hélicoptère.

Une architecture selon l'invention utilise une source primaire d'énergie déjà disponible dans un système propulsif sous la forme d'un air sous pression fourni par un turbomoteur en marche. L'architecture selon l'invention peut donc être obtenue à partir d'une architecture déjà existante d'un système propulsif sans nécessiter de modifications importantes de l'architecture.

Un turbomoteur hybride est un turbomoteur configuré pour pouvoir être mis, sur commande et volontairement, dans au moins un régime de veille prédéterminé, duquel il peut sortir de manière normale ou rapide (aussi dite urgente). Un turbomoteur ne peut être en veille qu'au cours d'un vol stabilisé de l'hélicoptère, c'est-à-dire, hors panne d'un turbomoteur de l'hélicoptère, au cours d'une situation de vol de croisière, lorsqu'il évolue dans des conditions normales. La sortie du régime de veille consiste à passer le turbomoteur en mode accélération du générateur de gaz par un entrainement compatible avec le mode de sortie imposée par les conditions (sortie de veille normale ou sortie de veille rapide (aussi dite d'urgence).

Avantageusement et selon l'invention, les moyens de prélèvement d'air sur le générateur de gaz d'un turbomoteur en marche comprennent au moins un port de prélèvement intégré sur un compresseur de ce turbomoteur en marche.

Selon cette variante, l'air sous pression est directement prélevé sur un compresseur du turbomoteur en marche. Un tel prélèvement d'air permet de répondre aux besoins d'air sous pression pour alimenter la turbine à air, sans néanmoins impacter la performance du turbomoteur en marche sur lequel l'air est prélevé.

Avantageusement et selon l'invention, les moyens de prélèvement d'air comprennent un gicleur permettant de doser le débit d'air prélevé sur ledit turbomoteur en marche.

La présence d'un gicleur, de préférence agencé directement sur le port de prélèvement d'air, permet de limiter le débit d'air maximal délivré à la turbine à air en cas de rupture de la conduite de cheminement d'air vers la turbine à air ou en cas d'une panne sur le circuit d'assistance.

Avantageusement et selon l'invention, ladite turbine à air est reliée mécaniquement audit générateur de gaz par le biais d'une boîte d'accessoires.

Une boîte d'accessoires permet l'entraînement des servitudes nécessaires au fonctionnement du générateur de gaz du turbomoteur hybride et d'équipements de l'hélicoptère, comme par exemple les dispositifs de conditionnement d'air. Selon cette variante, la turbine à air est directement intégrée sur cette boîte d'accessoires, ce qui permet d'une part de faciliter son installation et interconnexion avec le générateur de gaz du turbomoteur hybride, et d'autre part, de fournir une partie de la puissance nécessaire à l'entraînement des servitudes et/ou alimentation des équipements de l'hélicoptère.

Avantageusement, une architecture selon l'invention comprend des moyens de modulation de la puissance mécanique délivrée par ladite turbine à air audit générateur de gaz dudit turbomoteur hybride.

Les moyens de modulation permettent d'adapter la puissance mécanique délivrée au générateur de gaz du turbomoteur hybride en fonction des besoins. En particulier, pour un turbomoteur hybride pouvant fonctionner sur commande dans plusieurs régimes de veille distincts, notamment un régime de super-ralenti assisté et un régime vireur, les moyens de modulation permettent d'adapter la puissance à chaque régime.

Avantageusement et selon cette variante, lesdits moyens de modulation comprennent des moyens de commande du débit et/ou de la pression d'air fourni à ladite turbine à air.

Selon cette variante, la modulation de la puissance est obtenue par le biais de la commande du débit et/ou de la pression de l'air qui alimente la turbine à air.

Ces moyens de commande peuvent être de tous types. Par exemple, selon une première variante, ces moyens de commande comprennent une vanne commandée qui est agencée sur la conduite de cheminement d'air. Cette vanne peut être une vanne de coupure à deux états, un état passant dans lequel l'air circule librement dans la conduite de cheminement, et un état bloqué dans lequel l'air ne peut alimenter la turbine à air. Selon une autre variante, ces moyens de commande comprennent un distributeur à calage variable intégré dans la turbine à air et adapté pour déterminer le débit et/ou la pression d'air de la turbine à air. Selon une autre variante, les moyens de commande comprennent une pluralité de points d'injection d'air dans la turbine à air contrôlés par des vannes ou par un distributeur unique.

Avantageusement, une architecture selon l'invention comprend des moyens de lecture d'informations représentatives du fonctionnement dudit turbomoteur hybride, et lesdits moyens de commande sont fonction de ces informations.

Selon cette variante, des informations représentatives du fonctionnement du turbomoteur hybride sont utilisées pour déterminer le débit et/ou la pression d'air à délivrer à la turbine à air, ce qui permet d'adapter la puissance délivrée au générateur de gaz du turbomoteur hybride en fonction de l'état de fonctionnement du turbomoteur hybride. Par exemple, ces informations sont des mesures de paramètres tels que la vitesse de rotation du générateur de gaz ou la température en sortie de la turbine haute pression du générateur de gaz. Ces informations permettent en plus d'adapter la puissance délivrée aux conditions observées, de couper l'alimentation si un événement l'impose, ou de sortir le turbomoteur hybride de son mode de veille en cas de dysfonctionnement de l'assistance mécanique du générateur de gaz par la turbine à air. Ces informations peuvent également comprendre une mesure de la vitesse de rotation de la turbine à air pour éviter une survitesse liée à une défaillance de la chaine cinématique reliant la turbine à air au générateur de gaz du turbomoteur hybride.

Avantageusement, une architecture selon l'invention comprend un dispositif de désaccouplement mécanique commandé agencée entre la turbine à air et ledit générateur de gaz dudit turbomoteur hybride adapté pour pouvoir désaccoupler ladite turbine à air et ledit générateur de gaz en cas d'absence d'alimentation en air de la turbine à air.

Ce dispositif de désaccouplement permet de séparer mécaniquement la turbine à air du générateur de gaz du turbomoteur hybride lorsque le prélèvement d'air sur le turbomoteur en marche est coupé ou inexistant. Un tel dispositif peut être de tous types. Selon une variante, il comprend une roue libre agencée entre l'arbre de sortie de la turbine à air et l'arbre du générateur de gaz du turbomoteur hybride. Selon une autre variante, il comprend un mécanisme d'embrayage. Selon une autre variante, il comprend un crabot.

Avantageusement et selon l'invention, le turbomoteur hybride comprend un compartiment moteur dans lequel est notamment agencé le générateur de gaz, et la turbine à air présente une sortie d'air qui débouche dans ce compartiment moteur dudit turbomoteur hybride de manière à limiter la diminution de température dans ce compartiment et faciliter le redémarrage du turbomoteur.

Selon une autre variante, la sortie d'air débouche vers l'extérieur du compartiment moteur.

Selon une autre variante, la sortie d'air est utilisée afin de maintenir la température d'huile du moteur à un certain niveau dans le but de faciliter son redémarrage.

Selon une autre variante, la sortie d'air débouche dans une entrée d'air du turbomoteur hybride afin de limiter la baisse de température des pièces internes au turbomoteur dans le but de faciliter son redémarrage.

L'invention s'applique à la fois à un hélicoptère bimoteur et à un hélicoptère trimoteur. Dans le cas d'un hélicoptère trimoteur, et selon une première variante, les trois turbomoteurs sont de tailles identiques. L'un des trois turbomoteurs est un turbomoteur hybride apte à fonctionner dans au moins un régime de veille au cours d'un vol stabilisé de l'hélicoptère, les deux autres moteurs étant alors en marche et fonctionnant seuls au cours de ce vol stabilisé. Dans ce cas, la turbine à air est agencée entre l'un des turbomoteurs en marche et le turbomoteur hybride.

Selon une autre variante, le turbomoteur hybride est de plus petite taille que les deux turbomoteurs en marche. C'est ce moteur de plus petite taille qui est apte à fonctionner dans un régime de veille. Dans ce cas, la turbine à air est agencée entre l'un des deux gros turbomoteurs et le turbomoteur hybride.

Selon une autre variante, les trois turbomoteurs sont de tailles différentes. Le plus petit turbomoteur peut être éteint au cours d'un vol stabilisé et l'un des deux plus gros moteurs est un turbomoteur hybride apte à être mis en régime de veille en cas de besoin, l'autre turbomoteur étant alors le turbomoteur en marche. Dans ce cas, la turbine à air est agencée entre les deux plus gros turbomoteurs, le turbomoteur hybride et le turbomoteur en marche.

L'invention concerne également un hélicoptère comprenant un système propulsif caractérisé en ce que ledit système propulsif présente une architecture selon l'invention.

L'invention concerne également un procédé d'assistance mécanique d'un turbomoteur, dit turbomoteur en veille, fonctionnant dans un régime de veille au cours d'un vol stabilisé d'un hélicoptère comprenant des turbomoteurs, chaque turbomoteur comprenant un générateur de gaz et une turbine libre, les autres turbomoteurs, dits turbomoteurs en marche, fonctionnant seuls au cours de ce vol stabilisé.

Un procédé selon l'invention est caractérisé en ce qu'il comprend :
- une étape de prélèvement d'air sous pression sur le générateur de gaz d'un turbomoteur en marche,
- une étape de cheminement de l'air prélevé vers une turbine à air reliée mécaniquement audit générateur de gaz dudit turbomoteur en veille,
- une étape de transformation par ladite turbine à air de l'énergie de l'air fourni par ladite étape de cheminement en une énergie mécanique d'entraînement dudit générateur de gaz.

Un procédé selon l'invention est avantageusement mis en œuvre par une architecture selon l'invention. Une architecture selon l'invention met avantageusement en œuvre un procédé selon l'invention.

Avantageusement et selon l'invention, ladite étape de prélèvement d'air consiste à prélever de l'air sur un compresseur dudit générateur de gaz d'un turbomoteur en marche.

Avantageusement, un procédé selon l'invention comprend une étape de modulation de la puissance mécanique fournie par ladite turbine à air audit turbomoteur en veille.

Avantageusement et selon cette variante, ladite étape de modulation de la puissance comprend une étape de commande du débit et/ou de la pression d'air délivré à ladite turbine à air.

L'invention concerne également un procédé d'assistance, une architecture d'un système propulsif et un hélicoptère caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une architecture d'un système propulsif d'un hélicoptère bimoteur selon un mode de réalisation de l'invention,
- la figure 2 est une vue schématique d'une architecture d'un système propulsif d'un hélicoptère bimoteur selon un autre mode de réalisation de l'invention,
- la figure 3 est une vue schématique d'une architecture d'un système propulsif d'un hélicoptère bimoteur selon un autre mode de réalisation de l'invention, une vue schématique d'un dispositif de commande selon un mode de réalisation de l'invention,
- la figure 4 est une vue schématique d'une architecture d'un système propulsif d'un hélicoptère bimoteur selon un autre mode de réalisation de l'invention.

### 6. Description détaillée d'un mode de réalisation de l'invention

Les modes de réalisation décrits ci-après concernent une architecture d'un système propulsif d'un hélicoptère bimoteur. Cela étant, l'homme du métier comprendra aisément comment adapter les modes de réalisation décrits à un système propulsif multi-moteur, notamment trimoteur.

Cette architecture comprend deux turbomoteurs 5, 6. Chaque turbomoteur 5, 6 est piloté par un dispositif de contrôle-commande propre non représenté sur les figures à des fins de clarté.

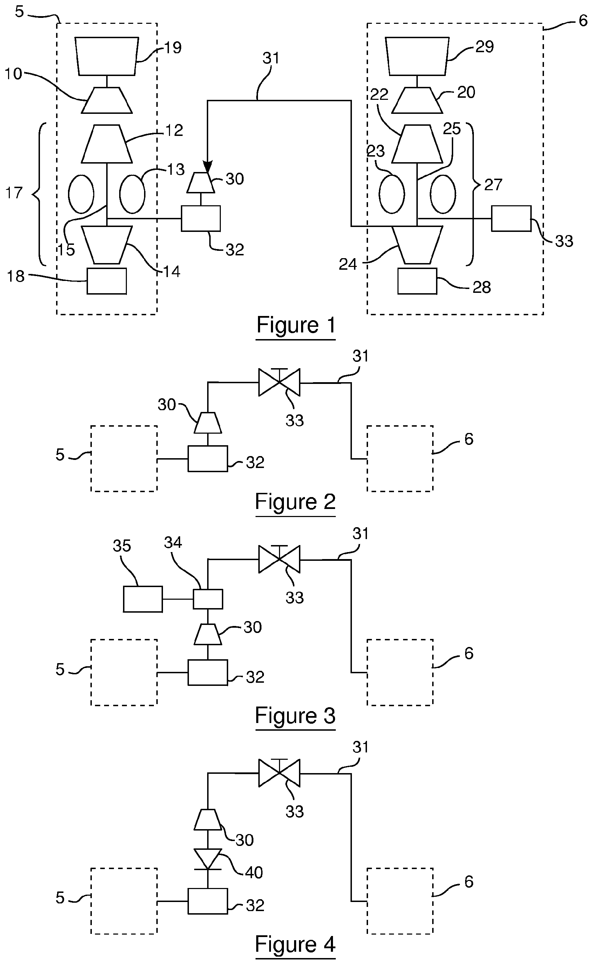

Chaque turbomoteur 5, 6 comprend respectivement et tel que représenté sur la figure 1, un générateur 17, 27 de gaz et une turbine 10, 20 libre alimentée par le générateur 17, 27. Le générateur 17, 27 de gaz comprend un compresseur 14, 24 d'air alimenté en air par une entrée 18, 28 d'air. Le compresseur 14, 24 alimente une chambre 13, 23 de combustion d'un carburant dans l'air comprimé qui délivre des gaz brûlés fournissant de l'énergie cinétique. Une turbine 12, 22 de détente partielle des gaz brûlés est couplée au compresseur 14, 24 par le biais d'un arbre 15, 25 d'entraînement pour pouvoir entraîner en rotation le compresseur 14, 24 et des équipements nécessaires au fonctionnement du générateur de gaz ou à l'hélicoptère. Ces équipements sont disposés dans une boîte 32, 33 d'accessoires. La partie résultante des gaz brûlés entraîne la turbine 10, 20 libre de transmission de puissance en lien avec la boite de transmission de puissance de l'hélicoptère puis s'évacue via l'échappement 19, 29.

Dans toute la suite, on considère que le turbomoteur 5 est un turbomoteur hybride apte à fonctionner dans au moins un régime de veille au cours d'un vol stabilisé de l'hélicoptère, le turbomoteur 6 en marche fonctionnant alors seul au cours de ce vol stabilisé.

L'architecture comprend en outre une turbine 30 à air reliée mécaniquement au générateur 17 de gaz du turbomoteur 5 hybride par le biais de la boîte 32 d'accessoires. Cette turbine 30 est alimentée en air par le biais d'une conduite 31 de cheminement d'air. La conduite 31 de cheminement d'air est reliée à un port de prélèvement d'air sur le compresseur 24 du turbomoteur 6 en marche de manière à pouvoir véhiculer l'air comprimé issu du compresseur 24 vers la turbine 30 d'air. La conduite 31 de cheminement est donc agencée entre le port de prélèvement d'air sur le générateur 27 de gaz du turbomoteur 6 en marche et une bouche d'entrée d'admission d'air de la turbine 30 à air. La turbine 30 à air permet donc de transformer l'énergie disponible dans l'air comprimé délivré par la conduite 31 de cheminement d'air en une énergie mécanique disponible sur son arbre de sortie.

Selon un mode de réalisation, cette turbine 30 à air est une turbine à réaction de type axiale ou centripète. Selon un autre mode de réalisation, la turbine 30 à air est une turbine à action avec injection partielle ou totale.

Selon un mode de réalisation non représenté sur les figures, l'architecture comprend en outre un gicleur permettant de doser le débit d'air prélevé sur le compresseur 24 du turbomoteur 6 en marche.

Selon le mode de réalisation de la figure 2, l'architecture comprend une vanne 33 de coupure commandée faisant office de moyens de commande du débit et de la pression d'air délivré à la turbine 30 à air. Selon ce mode de réalisation, la vanne est adaptée pour être placée dans deux états : un premier état passant dans lequel l'air prélevé sur le compresseur 24 est entièrement délivré à la turbine 30 à air, et un deuxième état bloqué dans lequel l'air ne peut plus être délivré à la turbine 30 à air.

Selon un autre mode de réalisation tel que représenté sur la figure 3, l'architecture comprend en outre un module 35 de commande d'un distributeur 34 à calage variable d'une turbine 30 à air du type axial ou centripète. Cet ensemble forme les moyens de commande du débit et de la pression d'air délivré à la turbine 30 à air et par extension forme les moyens de modulation de la puissance mécanique délivrée au générateur 17 de gaz du turbomoteur 5 hybride.

Selon le mode de réalisation de la figure 4, l'architecture comprend en outre une roue libre 40 agencée entre la turbine 30 à air et la boîte 32 d'accessoires. Cette roue libre 40 forme un dispositif de désaccouplement mécanique commandé de la turbine 30 à air et du générateur 17 de gaz. Cette roue 40 libre permet donc de garantir que la turbine 30 à air n'est plus en lien mécanique avec le générateur 17 de gaz lorsqu'elle n'est plus alimentée en air par la conduite 31 de cheminement d'air.

La sortie d'air de la turbine 30 à air peut présenter différentes organisations, non représentées sur les figures.

Par exemple, selon une première organisation, l'air en sortie de la turbine 30 à air est évacué dans le compartiment moteur afin de limiter la diminution de température dans le but de faciliter le redémarrage du turbomoteur en veille.

Selon une autre organisation, l'air en sortie de la turbine 30 à air est évacué vers l'extérieur du compartiment moteur.

Selon une autre organisation, l'air est injecté dans l'entrée 18 d'air du turbomoteur en veille afin de limiter la baisse de température des pièces internes au turbomoteur dans le but de faciliter son redémarrage.

Selon une autre organisation, l'air est utilisé pour maintenir l'huile du turbomoteur à une température compatible avec une limitation du couple résistant lors d'un redémarrage du turbomoteur et pour pouvoir rapidement disposer de toute la puissance nécessaire à ce redémarrage.

L'invention concerne aussi un procédé d'assistance mécanique du turbomoteur 5 hybride, lorsqu'il est dans un régime de veille.

Le procédé comprend une étape de prélèvement d'air sous pression sur le générateur de gaz d'un turbomoteur en marche, une étape de cheminement de l'air prélevé vers une turbine à air reliée mécaniquement audit générateur de gaz dudit turbomoteur en veille et une étape de transformation de l'énergie disponible dans l'air sous pression en une énergie mécanique disponible sur l'arbre en sortie de boîte d'accessoires.

Un procédé selon l'invention est avantageusement mis en œuvre par une architecture d'un système propulsif selon l'invention.

## Revendications

1. Architecture d'un système propulsif d'un hélicoptère multi-moteur comprenant des turbomoteurs (5, 6), chaque turbomoteur (5, 6) comprenant un générateur (17, 27) de gaz et une turbine (10, 20) libre entraînée en rotation par les gaz dudit générateur de gaz,
**caractérisée en ce qu'**elle comprend :
- au moins un turbomoteur parmi lesdits turbomoteurs, dit turbomoteur (5) hybride, apte à fonctionner dans au moins un régime de veille au cours d'un vol stabilisé de l'hélicoptère, les autres turbomoteurs, dits turbomoteurs (6) en marche, fonctionnant seuls au cours de ce vol stabilisé,
- une turbine (30) à air reliée mécaniquement audit générateur (17) de gaz dudit turbomoteur (5) hybride,
- des moyens de prélèvement d'air sous pression sur le générateur (27) de gaz d'un turbomoteur (6) en marche,
- une conduite (31) de cheminement de cet air prélevé vers ladite turbine (30) à air de sorte que la turbine (30) à air puisse transformer l'énergie de cet air sous pression en une énergie mécanique entraînant ledit générateur (17) de gaz dudit turbomoteur (5) hybride.

2. Architecture selon la revendication 1, **caractérisée en ce que** lesdits moyens de prélèvement d'air sur le générateur (27) de gaz d'un turbomoteur en marche comprennent un port de prélèvement ménagé sur un compresseur (24) de ce turbomoteur (6) en marche.

3. Architecture selon l'une des revendications 1 ou 2, **caractérisée en ce que** lesdits moyens de prélèvement d'air comprennent un gicleur permettant de doser le débit d'air prélevé sur ledit turbomoteur (6) en marche.

4. Architecture selon l'une des revendications 1 à 3, **caractérisée en ce que** ladite turbine (30) à air est reliée audit générateur (17) de gaz par le biais d'une boîte (32) d'accessoires.

5. Architecture selon l'une des revendications 1 à 4, **caractérisée en ce qu'**elle comprend des moyens (33 ; 34, 35) de modulation de la puissance mécanique délivrée par ladite turbine (30) à air audit générateur de gaz dudit turbomoteur hybride.

6. Architecture selon l'une des revendications 1 à 5, **caractérisée en ce que** lesdits moyens de modulation comprennent des moyens (33 ; 34, 35) de commande du débit et/ou de la pression d'air fourni à ladite turbine (30) à air.

7. Architecture selon la revendication 6, **caractérisée en ce qu'**elle comprend des moyens de lecture d'informations représentatives du fonctionnement dudit turbomoteur (5) hybride, et **en ce que** lesdits moyens (35, 34) de commande sont fonction de ces informations.

8. Architecture selon l'une des revendications 1 à 7, **caractérisée en ce qu'**elle comprend un dispositif (40) de désaccouplement mécanique commandé agencée entre la turbine (30) à air et ledit générateur (17) de gaz dudit turbomoteur (5) hybride adapté pour pouvoir désaccoupler ladite turbine (30) à air et ledit générateur (17) de gaz en cas d'absence d'alimentation en air de la turbine (30) à air.

9. Architecture selon l'une des revendications 1 à 8, **caractérisée en ce que** ladite turbine (30) à air présente une sortie d'air qui débouche dans un compartiment moteur dudit turbomoteur hybride de manière à limiter la diminution de température dans ce compartiment et faciliter le redémarrage du turbomoteur.

10. Hélicoptère comprenant un système propulsif **caractérisé en ce que** ledit système propulsif présente une architecture selon l'une des revendications 1 à 9.

11. Procédé d'assistance mécanique d'un turbomoteur, dit turbomoteur (5) en veille, fonctionnant dans un régime de veille au cours d'un vol stabilisé d'un hélicoptère comprenant des turbomoteurs (5, 6), chaque turbomoteur comprenant un générateur (17, 27) de gaz et une turbine libre, les autres turbomoteurs, dits turbomoteurs (6) en marche, fonctionnant seuls au cours de ce vol stabilisé, **caractérisé en ce qu'**il comprend :
- une étape de prélèvement d'air sous pression sur le générateur (27) de gaz d'un turbomoteur (6) en marche,
- une étape de cheminement de l'air prélevé vers une turbine (30) à air reliée mécaniquement audit générateur (17) de gaz dudit turbomoteur (5) en veille,
- une étape de transformation par ladite turbine (30) à air de l'énergie de l'air fourni par ladite étape de cheminement, en une énergie mécanique d'entraînement dudit générateur (17) de gaz dudit turbomoteur (5) en veille.

12. Procédé selon la revendication 11, **caractérisé en ce que** ladite étape de prélèvement d'air consiste à prélever de l'air sur un compresseur (24) dudit générateur (27) de gaz d'un turbomoteur (6) en marche.

13. Procédé selon l'une des revendications 11 ou 12, **caractérisé en ce qu'**il comprend une étape de modulation de la puissance mécanique fournie par ladite turbine (30) à air audit turbomoteur (5) en veille.

14. Procédé selon la revendication 13, **caractérisé en ce que** ladite étape de modulation de la puissance comprend une étape de commande du débit et/ou de la pression d'air délivré à ladite turbine (30) à air.

## Patentansprüche

1. Architektur eines Antriebsaggregats eines mehrmotorigen Hubschraubers, Turbomotoren (5, 6) umfassend, wobei jeder Turbomotor (5, 6) einen Gasgenerator (17, 27) und eine freie Turbine (10, 20) umfasst, die durch die Gase des Gasgenerators in Rotation versetzt wird, **dadurch gekennzeichnet, dass** sie umfasst:
- mindestens einen Turbomotor unter den Turbomotoren, Hybrid-Turbomotor (5) genannt, der in der Lage ist, während eines stabilisierten Fluges des Hubschraubers in mindestens einem Bereitschaftsmodus zu arbeiten, wobei die anderen Turbomotoren, Turbomotoren (6) im Betriebsmodus genannt, während dieses stabilisierten Fluges allein arbeiten,
- eine Luftturbine (30), die mechanisch mit dem Gasgenerator (17) des Hybrid-Turbomotors (5) verbunden ist,
- Mittel zur Entnahme von unter Druck stehender Luft aus dem Gasgenerator (27) eines Turbomotors (6) im Betriebsmodus,
- eine Leitung (31) zur Führung dieser entnommenen Luft zu der Luftturbine (30), so dass die Luftturbine (30) die Energie dieser unter Druck stehenden Luft in mechanische Energie umwandeln kann, die den Gasgenerator (17) des Hybrid-Turbomotors (5) antreibt.

2. Architektur nach Anspruch 1, **dadurch gekennzeichnet, dass** die Mittel zur Entnahme von Luft aus dem Gasgenerator (27) eines Turbomotors im Betrieb eine an einem Verdichter (24) dieses Turbomotors (6) im Betriebsmodus vorgesehene Entnahmeöffnung umfassen.

3. Architektur nach einem der Ansprüche 1 oder 2, **dadurch gekennzeichnet, dass** die Mittel zur Entnahme von Luft eine Düse umfassen, die es ermöglicht, den von dem Turbomotor (6) im Betriebsmodus entnommenen Luftdurchsatz zu dosieren.

4. Architektur nach einem der Ansprüche 1 bis 3, **dadurch gekennzeichnet, dass** die Luftturbine (30) über einen Zubehörkasten (32) mit dem Gasgenerator (17) verbunden ist.

5. Architektur nach einem der Ansprüche 1 bis 4, **dadurch gekennzeichnet, dass** sie Mittel (33; 34, 35) zur Modulation der von der Luftturbine (30) an den Gasgenerator des Hybrid-Turbomotors gelieferten mechanischen Leistung umfasst.

6. Architektur nach einem der Ansprüche 1 bis 5, **dadurch gekennzeichnet, dass** die Modulationsmittel Mittel (33; 34, 35) zur Steuerung des Luftdurchsatzes und/oder -drucks umfassen, die der Luftturbine (30) zugeführt wird.

7. Architektur nach Anspruch 6, **dadurch gekennzeichnet, dass** sie Mittel zum Lesen von Informationen umfasst, die für die Funktionsweise des Hybrid-Turbomotors (5) repräsentativ sind, und dadurch, dass die Steuermittel (35, 34) von diesen Informationen abhängen.

8. Architektur nach einem der Ansprüche 1 bis 7, **dadurch gekennzeichnet, dass** sie eine gesteuerte mechanische Entkopplungsvorrichtung (40) umfasst, die zwischen der Luftturbine (30) und dem Gasgenerator (17) des Hybrid-Turbomotors (5) angeordnet ist, die angepasst ist, um die Luftturbine (30) und den Gasgenerator (17) im Falle des Fehlens der Luftzufuhr zur Luftturbine (30) entkoppeln zu können.

9. Architektur nach einem der Ansprüche 1 bis 8, **dadurch gekennzeichnet, dass** die Luftturbine (30) einen Luftauslass aufweist, der in einen Motorraum des Hybrid-Turbomotors mündet, um den Temperaturabfall in diesem Raum zu begrenzen und das Wiederanlassen des Turbomotors zu erleichtern.

10. Hubschrauber, ein Antriebsaggregat umfassend, **dadurch gekennzeichnet, dass** das Antriebsaggregat eine Architektur nach einem der Ansprüche 1 bis 9 aufweist.

11. Verfahren zur mechanischen Unterstützung eines Turbomotors, Turbomotor (5) im Bereitschaftsmodus genannt, der während eines stabilisierten Fluges eines Hubschraubers, Turbomotoren (5, 6) umfassend, in einem Bereitschaftsmodus arbeitet, wobei jeder Turbomotor einen Gasgenerator (17, 27) und eine freie Turbine umfasst, wobei die anderen Turbomotoren, Turbomotoren (6) im Betriebsmodus genannt, während dieses stabilisierten Fluges allein arbeiten, **dadurch gekennzeichnet, dass** es umfasst:
- einen Schritt zur Entnahme von unter Druck stehender Luft aus dem Gasgenerator (27) eines Turbomotors (6) im Betriebsmodus,
- einen Schritt zur Führung der entnommenen Luft zu einer Luftturbine (30), die mechanisch mit dem Gasgenerator (17) des Turbomotors (5) im Bereitschaftsmodus verbunden ist,
- einen Schritt zur Umwandlung der Energie der durch den Führungsschritt zugeführten Luft durch die Luftturbine (30) in mechanische Energie zum Antrieb des Gasgenerators (17) des Turbomotors (5) im Bereitschaftsmodus.

12. Verfahren nach Anspruch 11, **dadurch gekennzeichnet, dass** der Schritt zur Entnahme von Luft darin besteht, Luft aus einem Verdichter (24) des Gasgenerators (27) eines Turbomotors (6) im Betriebsmodus zu entnehmen.

13. Verfahren nach einem der Ansprüche 11 oder 12, **dadurch gekennzeichnet, dass** es einen Schritt zur Modulation der mechanischen Leistung umfasst, die von der Luftturbine (30) an den Turbomotor (5) im Bereitschaftsmodus geliefert wird.

14. Verfahren nach Anspruch 13, **dadurch gekennzeichnet, dass** der Schritt zur Modulation der Leistung einen Schritt zur Steuerung des Luftdurchsatzes und/oder -drucks umfassen, die der Luftturbine (30) zugeführt wird.

## Claims

1. Architecture of a propulsion system of a multiple-engine helicopter comprising turboshaft engines (5, 6), each turboshaft engine (5, 6) comprising a gas generator (17, 27) and a free turbine (10, 20) that is rotated by the gases from said gas generator,
**characterised in that** it comprises:
- at least one turboshaft engine from among said turboshaft engines, referred to as the hybrid turboshaft engine (5), that is capable of operating in at least one standby mode during a stable flight of the helicopter, the other turboshaft engines, referred to as running turboshaft engines (6), operating alone during this stable flight,
- an air turbine (30) that is mechanically connected to said gas generator (17) of said hybrid turboshaft engine (5),
- means for withdrawing pressurised air from the gas generator (27) of a running turboshaft engine (6),
- a duct (31) for routing this withdrawn air to said air turbine (30) such that the air turbine (30) can transform the energy from said pressurised air into mechanical energy that drives said gas generator (17) of said hybrid turboshaft engine (5).

2. Architecture according to claim 1, **characterised in that** said means for withdrawing air from the gas generator (27) of a running turboshaft engine comprise a withdrawal port that is arranged on a compressor (24) of this running turboshaft engine (6).

3. Architecture according to either claim 1 or claim 2, **characterised in that** said air withdrawal means comprise a discharge jet that makes it possible to meter the flow of air withdrawn from said running turboshaft engine (6).

4. Architecture according to any of claims 1 to 3, **characterised in that** said air turbine (30) is connected to said gas generator (17) by means of an accessory gearbox (32).

5. Architecture according to any of claims 1 to 4, **characterised in that** it comprises means (33; 34, 35) for adjusting the mechanical power delivered by said air turbine (30) to said gas generator of said hybrid turboshaft engine.

6. Architecture according to any of claims 1 to 5, **characterised in that** said adjustment means comprise means (33; 34, 35) for controlling the flow and/or the pressure of air provided to said air turbine (30).

7. Architecture according to claim 6, **characterised in that** it comprises means for reading information representative of the operation of said hybrid turboshaft engine (5), and **in that** said control means (35, 34) are dependent on this information.

8. Architecture according to any of claims 1 to 7, **characterised in that** it comprises a controlled mechanical disconnection device (40) that is arranged between the air turbine (30) and said gas generator (17) of said hybrid turboshaft engine (5) and that is capable of disconnecting said air turbine (30) from said gas generator (17) if there is no supply of air to the air turbine (30).

9. Architecture according to any of claims 1 to 8, **characterised in that** said air turbine (30) comprises an air outlet which opens into an engine compartment of said hybrid turboshaft engine so as to limit the drop in temperature in this compartment and to facilitate restarting the turboshaft engine.

10. Helicopter comprising a propulsion system, **characterised in that** said propulsion system has an architecture according to any of claims 1 to 9.

11. Method for mechanically assisting a turboshaft engine, referred to as the turboshaft engine (5) in standby mode, that operates in a standby mode during a stable flight of a helicopter comprising turboshaft engines (5, 6), each turboshaft engine comprising a gas generator (17, 27) and a free turbine, the other turboshaft engines, referred to as running turboshaft engines (6), operating alone during this stable flight, **characterised in that** it comprises:
- a step of withdrawing pressurised air from the gas generator (27) of a running turboshaft engine (6),
- a step of routing the withdrawn air to an air turbine (30) that is mechanically connected to said gas generator (17) of said turboshaft engine (5) in standby mode,
- a step of transforming, by means of said air turbine (30), the energy from the air provided by said routing step into mechanical energy for driving said gas generator (17) of said turboshaft engine (5) in standby mode.

12. Method according to claim 11, **characterised in that** said air withdrawal step consists in withdrawing the air from a compressor (24) of said gas generator (27) of a running turboshaft engine (6).

13. Method according to either claim 11 or claim 12, **characterised in that** it comprises a step of adjusting the mechanical power provided by said air turbine (30) to said turboshaft engine (5) in standby mode.

14. Method according to claim 13, **characterised in that** said step of adjusting the power comprises a step of controlling the flow and/or the pressure of air delivered to said air turbine (30).
